# EUROPÄISCHE PATENTSCHRIFT

(11) **EP 1 957 321 B1**
(45) Veröffentlichungstag und Bekanntmachung des Hinweises auf die Patenterteilung: **26.08.2009**
(21) Anmeldenummer: 06818589.1
(22) Anmeldetag: 16.11.2006
(51) Int. Cl.: B60R 21/18

(54) **SICHERHEITSGURT**
SEATBELT
CEINTURE DE SECURITE

(30) Priorität: 06.12.2005 DE 102005058343
(43) Veröffentlichungstag der Anmeldung: 20.08.2008
(73) Patentinhaber: AUTOLIV DEVELOPMENT AB, 447 83 Vargarda (SE)
(72) Erfinder: STRUTZ, Michael, 25335 Neuendorf (DE)
(74) Vertreter: Stornebel, Kai
(86) Internationale Anmeldenummer: PCT/EP2006/011001
(87) Internationale Veröffentlichungsnummer: WO 2007/065543

(56) Entgegenhaltungen:
- DE-A1-102005 004 818
- DE-U1- 20 004 363
- GB-A- 2 345 034
- US-A- 3 820 842

## Beschreibung

Die Erfindung betrifft einen Sicherheitsgurt für Kraftfahrzeuge mit einem Rückhalteelement für eine Gurtzunge, das von dem Sicherheitsgurt absteht.

Aus dem Stand der Technik sind Sicherheitsgurte bekannt, bei denen zum Halten einer Gurtzunge in einer vorbestimmen Position in einer Parkstellung eines Gurtsystems ein Rückhalteelement, ein sogenannter Gurtknopf, vorgesehen ist. Dieser Gurtknopf besteht aus zwei oder mehreren Teilen, die beidseitig durch das Gurtband des Sicherheitsgurtes gestochen oder geschoben werden und über eine Klippverbindung zusammengehalten sind. Der Gurtknopf verhindert, dass die Gurtzunge in der Ruheposition auf dem Sitzpolster aufliegt und ermöglicht das Positionieren der Gurtzunge an der gewünschten Position. Ein solcher Gurtknopf ist aus der US 2004/0250387 A1 bekannt.

Aufgrund des beiderseits über den Sicherheitsgurt hinausstehenden Gurtknopf kommt es zu einer ästhetischen Beeinträchtigung und führt zu der Notwendigkeit, die Gurtzunge auf der dem Sitzpolster abgewandten Seite so auszugestalten, dass die Gurtzunge in der Ruhestellung flach herunterhängen und an dem Sicherheitsgurt anliegen kann.

Durch die Durchdringung des Gurtbandgewebes bei der Fügung der Gurtknopfelemente kommt es zu einer Materialschwächung. Darüber hinaus besteht die Schwierigkeit, bei aufblasbaren Sicherheitsgurten einen hinreichenden Gasdurchtritt im Bereich des Gurtknopfes zu gewährleisten.

Aus der DE 103 27 753 A1 ist eine Sensoranordnung zur Anbringung an einem Gurt, insbesondere an einem Sicherheitsgurt eines Kraftfahrzeuges bekannt, bei dem ein Sensor auf der dem Fahrzeuginsassen abgewandten Oberseite an dem Gurt angebracht ist. Die Sensoren dienen zur Ermittlung beispielsweise der Herzfrequenz oder der Körpertemperatur oder können als Mikrofon ausgebildet sein.

Die gattungsbildende US 3,820,842 beschreibt einen aufblasbaren Sicherheitsgurt mit einem langgestreckten Rückhalteabschnitt, der mit einem Gasgenerator in Verbindung steht. An der Außenseite des aufblasbaren Gurtes ist über eine Naht, eine Verklebung oder andere Befestigungsmittel, eine Schlaufe festgenäht, an der die Gurtzunge verschieblich festgelegt ist.

Aufgabe der vorliegenden Erfindung ist es, einen Sicherheitsgurt bereitzustellen, der angenehm zu tragen ist, ein erhöhtes Sicherheitspotential aufweist und optisch ansprechend ist.

Erfindungsgemäß wird diese Aufgabe durch einen Sicherheitsgurt mit den Merkmalen des Anspruchs 1 gelöst. Vorteilhafte Ausgestaltungen und Weiterbildungen der Erfindung sind in den Unteransprüchen beschrieben.

Der erfindungsgemäße Sicherheitsgurt für Kraftfahrzeuge mit einem Rückhalteelement für eine Gurtzunge, das von dem Sicherheitsgurt absteht, sieht eine einseitige Anordnung des Rückhalteelementes an dem Sicherheitsgurt vor, so dass eine Seite des Sicherheitsgurtes, bevorzugt die dem Gurtnutzer zugewandte Seite, ohne ein überstehendes bzw. vorstehenden Rückhalteelement oder einen Gurtschlosszungenstopper versehen ist. In der Parkstellung liegt die Schlosszunge flach an dem Sicherheitsgurt an, da das Rückhalteelement nur auf der Sicherheitsgurtrückseite sichtbar und wirksam übersteht. Dadurch wird auf der Gurtvorderseite in der Parkstellung ein Abstehen in Richtung des Fahrzeuginnenraumes vermieden. Die Erfindung sieht weiter vor, dass der Sicherheitsgurt als ein mehrlagiger, einen Hohlraum aufweisender Sicherheitsgurt ausgebildet ist, der über einen Gasgenerator mit einem entsprechenden Gas befüllbar ist. Dieser Hohlraum wird aus mehreren Sicherheitsgurtlagen gebildet. Die Gurtzunge ist verschieblich an dem Sicherheitsgurt festgelegt.

Um auch Gurtzungen zum Einsatz bringen zu können, die einen breiteren Gurtschlitz aufweisen, ist vorgesehen, dass das Rückhalteelement mindestens 4 mm dick ist, um eine sichere Festlegung der Gurtzunge an der gewünschten Position sicherstellen zu können.

Ebenfalls ist es möglich, dass sich das Rückhalteelement über zumindest die Hälfte der Breite des Sicherheitsgurtes erstreckt, bevorzugt über nahezu die gesamte Breite des Gurtbandes, um entsprechende Schlitzquerschnitte überdecken und damit eine sichere Zuordnung der Gurtzunge an dem Sitzgurt gewährleisten zu können. Auf den entsprechend großen Rückhalteelementen
kann eine Kennzeichnung mit einem Informationsgehalt aufgebracht sein, die beispielsweise über die Konstruktionsmerkmale oder Eigenschaften des Sicherheitsgurtes informiert. In diesem Fall ist das Rückhalteelement vorzugsweise auf der Sichtseite des Gurtbandes angeordnet, so dass der Informationsgehalt der Kennzeichnung von dem Gurtnutzer erkennbar ist. Ferner bietet die Anordnung des Rückhaltelementes auf der Sichtseite den Vorteil, dass insbesondere bei sitzintegrierten Gurtsystemen das Rückhalteelement die Ablagestellung nicht nachteilig beeinflusst, so dass sich insgesamt ein geordnetes Erscheinungsbild ergibt.

Es ist vorgesehen, dass das Rückhalteelement in herkömmlicher Art und Weise an einer Sicherheitsgurtlage befestigt ist, also formschlüssig auf der Innenseite des Sicherheitsgurtes an einer Lage des Sicherheitsgurtes angebracht ist, um die Gurtzunge festzulegen. Eine grundsätzliche Alternative zu der formschlüssigen Festlegung besteht in einem Aufkleben oder einem Aufschweißen als eine kraftschlüssige oder stoffschlüssige Verbindung des Rückhalteelementes auf einer Seite des Sicherheitsgurtes oder auf einer Seite einer Sicherheitsgurtlage

In allen Fällen wird erreicht, dass sich das Aufblasverhalten des aufblasbaren Sicherheitsgurtes nicht verändert und der Tragekomfort nicht dadurch gestört wird, dass ein Teil des Rückhalteelementes auf der dem Gurtnutzer in der Betriebsposition zugewandten Seite angeordnet ist. Dabei ist das Rückhalteelement auf der dem Rückenlehnenpolster zugewandten Seite des Sicherheitsgurtes angebracht.

Nachfolgend wird ein Ausführungsbeispiel der Erfindung anhand der beigefügten Figuren näher erläutert. Es zeigen:
- Figur 1 -: eine schematische, perspektivische Darstellung eines Gurtsystems;
- Figur 2 -: eine Querschnittsansicht der Figur 1;
- Figur 3 -: eine Querschnittsansicht durch eine weitere Ausführungsform; sowie
- Figur 4 -: eine Variante der Figur 3.

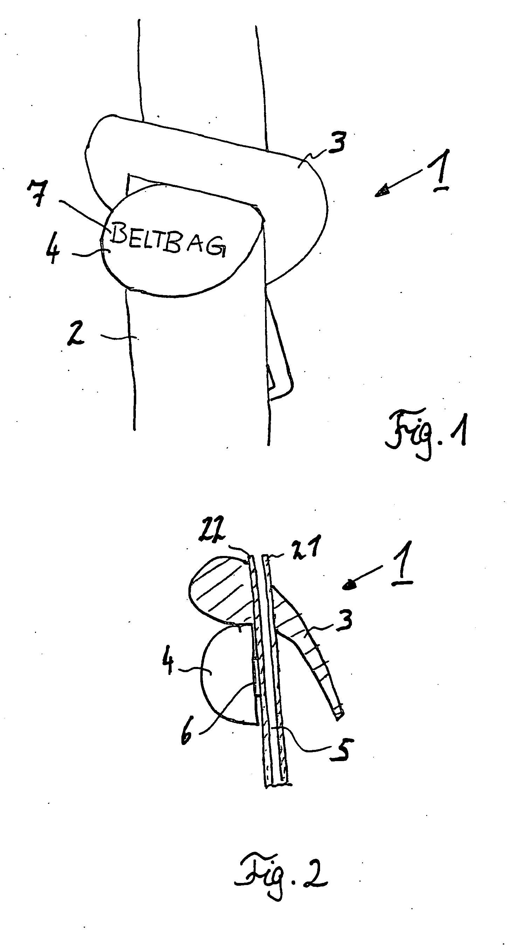

In der Figur 1 ist ein Gurtsystem 1 aus einem Sicherheitsgurt 2 und einer Gurtzunge 3 gezeigt. Die Gurtzunge 3 wird bei einem Anlegen des Sicherheitsgurtes 2 in ein Gurtschloss eingeführt und dort formschlüssig verriegelt. Die Gurtzunge 3 ist verschieblich an dem Sicherheitsgurt 2 festgelegt. In der Figur 1 ist der Sicherheitsgurt 2 in seiner Ruheposition gezeigt, in der er im Wesentlichen vertikal von einer oberen Gurtumlenkung bis zu einem unteren Endbeschlag geführt ist. Die Gurtzunge 3 liegt in dieser Stellung an dem Rückhalteelement 4, das sich im Wesentlichen über die gesamte Breite des Sicherheitsgurtes 2 erstreckt, auf, wobei sich das Rückhalteelement 4, auf dessen Oberfläche ein Schriftzug 7 oder ein anderes Zeichen befinden kann, auf der Rückseite des Sicherheitsgurtes 2 befindet, also auf der dem Gurtnutzer abgewandten Seite. Die Gurtzunge 3 dagegen ragt mit dem Gurtzungenende, das in das Gurtschloss einführbar ist, in Richtung auf den Gurtnutzer, so dass dieser die Gurtzunge 3 leicht greifen kann. Das Rückhalteelement 4 verhindert ein Herunterrutschen der Gurtzunge 3 bis auf den Endbeschlag und hält die Gurtzunge 3 in Griffhöhe für den Gurtnutzer bereit.

In der Figur 2 ist die Ausgestaltung des Sicherheitsgurtes der Figur 1 in Querschnittsansicht gezeigt. Der Figur 2 ist zu entnehmen, dass der Sicherheitsgurt 2 aus zwei Gurtlagen 21, 22 besteht, zwischen denen ein Hohlraum 5 ausgebildet ist, durch den Gas aus einem Gasgenerator in den Sicherheitsgurt 2 eingeleitet werden kann. Im Falle eines Unfalles bläst sich der Sicherheitsgurt 2 auf und stellt eine verbesserte Rückhaltewirkung zur Verfügung. Um einen problemlosen Gasdurchtritt durch die Gurtzunge 3 zu ermöglichen, ist ein relativ breiter Gurtschlitz innerhalb der Gurtzunge 3 ausgebildet. Dementsprechend ist das Rückhalteelement 4 etwas dicker als die Breite des Gurtschlitzes ausgebildet.

In der Figur 2 ist zu erkennen, dass das Rückhalteelement 4 nur an der Außenseite einer Gurtbandlage 22 angeordnet ist. Eine Durchdringung des Sicherheitsgurtgewebes tritt nicht auf; vielmehr ist eine Klebestelle 6 zwischen dem Rückhalteelement 4 und der Sicherheitsgurtlage 22 vorgesehen. Alternativ kann das Rückhalteelement 4 auch an dem Sicherheitsgurt 2 angeschweißt bzw. an der Sicherheitsgurtlage 22 angeschweißt sein. Ebenfalls ist es bei einer zweilagigen Ausgestaltung des Sicherheitsgurtes 2 möglich, eine Lage 21, 22 zu durchdringen und das Rückhalteelement 4 auf eine konventionelle Art und Weise an der einen Lage 22 festzulegen. Ein entsprechendes Konterstück für das Rückhaltelement 4 wird dann auf der Innenseite im Hohlraum 5 untergebracht.

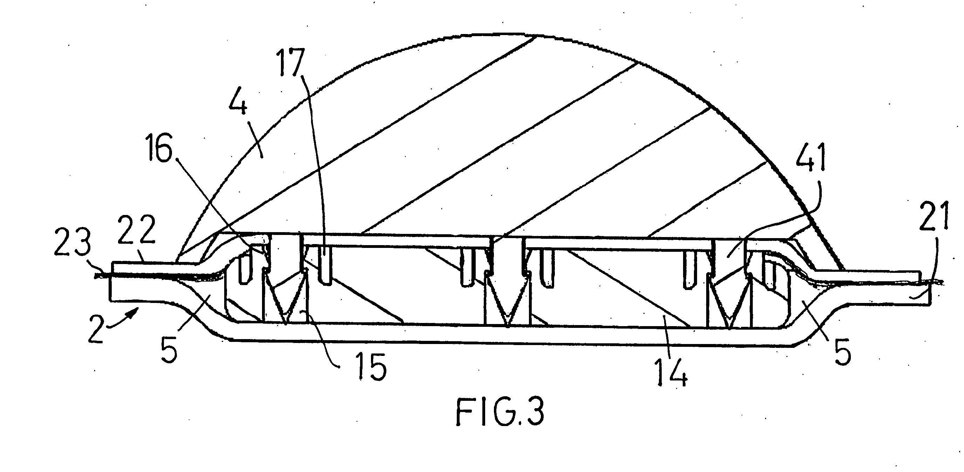

In der Figur 3 ist in Querschnittsansicht eine alternative Ausführungsform gezeigt, bei der das Rückhalteelement 4 formschlüssig an einer Lage 22 des Sicherheitsgurtes 2 befestigt ist. Formschlusselemente 41, die an dem Rückhalteelement 4 befestigt oder ausgebildet sind, durchdringen die obere Lage 22 des Sicherheitsgurtes 2 und greifen dort in ein Konterstück 14 ein. Das Konterstück 14 ist in dem Holraum 5, der durch die beiden Sicherheitsgurtlagen 21, 22 gebildet ist, eingeführt bzw. ist an der oberen Lage 22 befestigt, während die untere Lage 21 an der oberen Lage 22 festgelegt, beispielsweise festgeklebt oder verschweißt wird. Das Konterstück 14 weist Einführschrägen 16 auf, durch die die pfeilförmig ausgebildeten Formschlusselemente 41 in korrespondierende Ausnehmungen 15 eingeführt werden können. Seitlich neben den Ausnehmungen 15 bzw. den Einführschrägen 16 sind Entlastungsausnehmungen 17 angeordnet, die ein Auffedern der mit einer Hinterschneidung versehenen Wangen der Ausnehmung 15 ermöglichen.

Zwischen den beiden Lagen 21, 22 des Sicherheitsgurtes kann eine Dichtung 23 oder eine Zwischenlage angeordnet sein.

Alternativ zu der dargestellten, allein zweilagigen Ausgestaltung des Sicherheitsgurtes 2 ist es möglich, dass innerhalb des Freiraumes 5, der zwischen der oberen Lage 22 und der unteren Lage 21 ausgebildet ist, ein Entfaltungskörper aus einem elastischen, vorzugsweise gasdichten Material angeordnet ist, in den das Gas des Gasgenerators eingeleitet wird. Die beiden Lagen 21, 22 dienen dann als Umhüllung des Entfaltungskörpers, der bevorzugt schlauchförmig und einstückig ausgebildet ist, um Undichtigkeiten zu vermeiden oder zu minimieren. Dadurch wird vermieden, dass Entfaltungsgas aus dem Hohlraum 5 durch die Durchtrittsöffnungen der Formschlusselemente 41 innerhalb der Sicherheitsgurtlage 22 entweicht. Ebenfalls kann Gewebe für die Sicherheitsgurtlagen 21, 22 verwendet werden, das angenehm zu tragen ist und ausreichend hohe Zugfestigkeiten aufweist, ohne dass gleichzeitig auf eine erhöhte Gasdichtheit zum Schutz gegen ein unbeabsichtigtes Austreten des Entfaltungsgases durch den Sicherheitsgurt in Richtung auf den Gurtnutzer geachtet werden müsste.

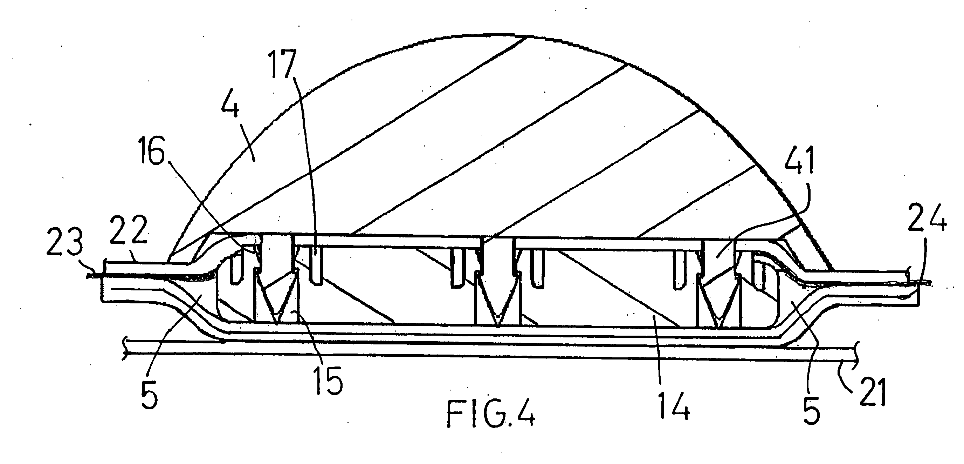

Eine solche Variante des Sicherheitsgurtes ist in der Figur 4 dargestellt, in der die beiden Sicherheitsgurtlagen 21, 22 nicht miteinander verbunden dargestellt gezeigt sind. Der Entfaltungskörper 24 ist innerhalb des Freiraumes 5 zwischen den Sicherheitsgurtlagen 21, 22 angeordnet und liegt flach zusammengedrückt unterhalb des Konterstückes 14 zwischen dem Konterstück 14 und der unteren Sicherheitsgurtlage 21. An den nicht dargestellten äußeren Enden der Sicherheitsgurtlagen 21, 22 kann eine Verschweißung, Verklebung oder Vernähung stattfinden, gegebenenfalls kann der Sicherheitsgurt auch einstückig ausgebildet sein und sowohl das Konterelement 14 als auch den Entfaltungskörper 24, der mit dem Gasgenerator strömungstechnisch verbunden ist, aufnehmen.

In der angelegten Position befindet sich das Rückhalteelement auf der Oberseite des Sicherheitsgurtes 2, also auf der dem Gurtnutzer abgewandten Seite des Beckengurtes und beeinträchtigt das Trage- und Gleitverhalten nicht. Die vorgesehene Klebetechnik vereinfacht den Montageprozess und schwächt darüber das Gewebe des Sicherheitsgurtes 2 nicht. Durch die einseitige Aufbringung bzw. die einlagige Befestigung ist es möglich, die Funktion des Sicherheitsgurtes 2, insbesondere auch in der Ausgestaltung als ein aufblasbarer Sicherheitsgurt nicht zu beeinträchtigen. Das Rückhalteelement 4 kann bei einer zweilagigen Ausgestaltung auch mit einer Gewebelage verprägt werden.

## Patentansprüche

1. Sicherheitsgurt für ein Kraftfahrzeug mit einem Rückhalteelement für eine Gurtzunge, das von dem Sicherheitsgurt absteht, wobei der Sicherheitsgurt (2) als mehrlagiger, einen Hohlraum (5) zwischen den Sicherheitsgurtlagen (21, 22) ausbildender Sicherheitsgurt (2) ausgebildet ist, **dadurch gekennzeichnet, dass** die Gurtzunge (3) an dem Sicherheitsgurt verschieblich festgelegt ist und das Rückhalteelement (4) nur auf einer Seite des Sicherheitsgurtes (2) von diesem absteht.

2. Sicherheitsgurt nach Anspruch 1, **dadurch gekennzeichnet, dass** das Rückhalteelement (4) mindestens 4 mm dick ist.

3. Sicherheitsgurt nach Anspruch 1 oder 2, **dadurch gekennzeichnet, dass** das Rückhalteelement (4) sich über mindestens die Hälfte der Breite des Sicherheitsgurtes (2) erstreckt.

4. Sicherheitsgurt nach einem der voranstehenden Ansprüche, **dadurch gekennzeichnet, dass** das Rückhalteelement (4) mit einer einen Informationsgehalt aufweisenden Kennzeichnung (7) versehen ist.

5. Sicherheitsgurt nach einem der voranstehenden Ansprüche, **dadurch gekennzeichnet, dass** das Rückhalteelement (4) kraftschlüssig oder stoffschlüssig an einer Lage (21, 22) des Sicherheitsgurtes (2) befestigt ist.

6. Sicherheitsgurt nach einem der Ansprüche 1 bis 4, **dadurch gekennzeichnet, dass** das Rückhalteelement (4) aufgeklebt oder aufgeschweißt ist.

7. Sicherheitsgurt nach einem der Ansprüche 1 bis 4, **dadurch gekennzeichnet, dass** das Rückhalteelement (4) formschlüssig an einer Lage (21, 22) des Sicherheitsgurtes (2) befestigt, insbesondere verprägt ist.

8. Sicherheitsgurt nach einem der voranstehenden Ansprüche, **dadurch gekennzeichnet, dass** das Rückhalteelement (4) auf der einem Rückenlehnenpolster zugewandten Seite des Sicherheitsgurtes (2) angeordnet ist.

9. Sicherheitsgurt nach einem der Ansprüche 1 bis 7, **dadurch gekennzeichnet, dass** das Rückhalteelement (4) in der Ablagestellung des Sicherheitsgurtes (2) auf der Sichtseite des Sicherheitsgurtes (2) angeordnet ist.

## Claims

1. Seat belt for a motor vehicle with a retaining element for a belt latch, which retaining element protrudes from the seat belt, the seat belt (2) being designed as a multi-layered seat belt (2) forming a cavity (5) between the seat belt layers (21, 22), **characterized in that** the belt latch (3) is fixed in a displaceable manner to the seatbelt and the retaining element (4) only protrudes from the seat belt (2) on one side thereof.

2. Seat belt according to Claim 1, **characterized in that** the retaining element (4) is at least 4 mm thick.

3. Seat belt according to Claim 1 or 2, **characterized in that** the retaining element (4) extends over at least half of the width of the seat belt (2).

4. Seat belt according to one of the preceding claims, **characterized in that** the retaining element (4) is provided with a label (7) having an information content.

5. Seat belt according to one of the preceding claims, **characterized in that** the retaining element (4) is fastened to a layer (21, 22) of the seat belt (2) frictionally or with a cohesive material joint.

6. Seat belt according to one of Claims 1 to 4, **characterized in that** the retaining element (4) is adhesively bonded or welded on.

7. Seat belt according to one of Claims 1 to 4, **characterized in that** the retaining element (4) is fastened to a layer (21, 22) of the seat belt (2) in an interlocking manner, in particular is stamped thereon.

8. Seat belt according to one of the preceding claims, **characterized in that** the retaining element (4) is arranged on that side of the seat belt (2) which faces a back rest cushion.

9. Seat belt according to one of Claims 1 to 7, **characterized in that,** in the storage position of the seat belt (2), the retaining element (4) is arranged on the visible side of the seat belt (2).

## Revendications

1. Ceinture de sécurité pour un véhicule automobile comprenant un élément de retenue pour une languette de ceinture, lequel fait saillie sur la ceinture de sécurité, la ceinture de sécurité (2) étant réalisée en tant que ceinture de sécurité (2) en plusieurs couches et formant une cavité (5) entre les couches de ceinture de sécurité (21, 22), **caractérisée en ce que** la languette de ceinture (3) est préfixée à la ceinture de sécurité de façon déplaçable et l'élément de retenue (4) ne fait saillie sur la ceinture de sécurité (2) que d'un côté de celle-ci.

2. Ceinture de sécurité selon la revendication 1, **caractérisée en ce que** l'élément de retenue (4) a une épaisseur d'au moins 4 mm.

3. Ceinture de sécurité selon la revendication 1 ou 2, **caractérisée en ce que** l'élément de retenue (4) s'étend sur au moins la moitié de la largeur de la ceinture de sécurité (2).

4. Ceinture de sécurité selon l'une quelconque des revendications précédentes**, caractérisée en ce que** l'élément de retenue (4) est muni d'un identificateur (7) présentant un contenu informatif.

5. Ceinture de sécurité selon l'une quelconque des revendications précédentes, **caractérisée en ce que** l'élément de retenue (4) est fixé par adhérence ou par matière à une couche (21, 22) de la ceinture de sécurité (2).

6. Ceinture de sécurité selon l'une quelconque des revendications 1 à 4, **caractérisée en ce que** l'élément de retenue (4) est collé ou soudé.

7. Ceinture de sécurité selon l'une quelconque des revendications 1 à 4, **caractérisée en ce que** l'élément de retenue (4) est fixé par verrouillage de forme à une couche (21, 22) de la ceinture de sécurité (2), en particulier estampé.

8. Ceinture de sécurité selon l'une quelconque des revendications précédentes, **caractérisée en ce que** l'élément de retenue (4) est agencé sur la face de la ceinture de sécurité (2) tournée vers un rembourrage de dossier.

9. Ceinture de sécurité selon l'une quelconque des revendications 1 à 7, **caractérisée en ce que** l'élément de retenue (4) est agencé sur le côté visible de la ceinture de sécurité (2) dans la position de repos de la ceinture de sécurité (2)
